# EUROPEAN PATENT APPLICATION

(11) **EP 1 519 106 A2**
(43) Date of publication of application: **30.03.2005**
(21) Application number: 04022834.8
(22) Date of filing: 24.09.2004
(51) Int. Cl.: F21V 21/005, F21S 2/00, F21S 4/00, F21V 23/06

(54) **Lighting appliance**

(30) Priority: 24.09.2003 JP 2003332344
(71) Applicant: Toshiba Lighting & Technology Corporation, Shinagawa-ku, Tokyo (JP)
(72) Inventor: Shimizu, Keiichi Toshiba Lighting & Techn. Corp., Shinagawa-ku Tokyo (JP); Iwamoto, Masami Toshiba Lighting & Techn. Corp., Shinagawa-ku Tokyo (JP); Egawa, Kazuo Toshiba Lighting & Techn. Corp., Shinagawa-ku Tokyo (JP); Moriyama, Takayoshi Toshiba Lighting & Tech. Corp., Shinagawa-ku Tokyo (JP); Nakanishi, Akiko Toshiba Lighting & Techn. Corp., Shinagawa-ku Tokyo (JP)
(74) Representative: O'Connell, David Christopher

(57) **Abstract**

A lighting appliance (1) provided with, a power supply unit (2) provided with; a first housing (21), a rectifier (26) accommodated in the first housing for converting an AC current to a DC current, a first electricity-supplying connector (23) provided on a side of the first housing, and a lighting unit (3) provide with; a second housing (30), a power supply line provided with, an electricity-receiving connector (32) which is provided on a side of the second housing, and constituted to be electrically and mechanically connectable with the first electricity-supplying connector of the power supply unit, a second electricity-supplying connector (34) which is provided on a side other than the second housing, for feeding out the DC current received by the electricity-receiving connector, a second electricity-supplying connector having the same feature with the electricity-supplying connector of the power supply unit, a bus-line connected between the electricity-receiving connector and the second electricity-supplying connector, a current regulator (39) accommodated in the second housing, which is connected to the power supply line, and a light emitting semiconductor (38) accommodated in the second housing, which is driven by the output power of the current regulator.

## Description

This application is based upon and claims the benefit of priority from the prior Japanese Patent Application JP2003-332344 filed on September 24, 2003, the entire content of which is incorporated herein by reference.

This invention relates to a lighting appliance which comprises a power supply unit and a lighting unit.

As disclosed in JP 2002-163907 etc, a lighting appliance having a lighting unit capable of coupling with other lighting unit, for illuminating according to a situation, have been well known. Such a lighting appliance comprises a power supply unit for supplying electric power to a lighting unit and each lighting unit. These lighting units connect and it connects with one power supply unit. Since there is no necessity of establishing a power source in each lighting unit, it excels in the miniaturization of the whole lighting appliance, and the workability of extension of a lighting appliance.

In the power supply unit, it has the current controlling circuit for controlling the current supplied to each lighting unit. Here, parallel connection of the light source of each lighting unit is carried out to the current controlling circuit of a power supply unit. Accordingly, the current controlling circuit had to design current capacity according to the number of lighting units.

The current supplied to each lighting unit decreased, and the conventional lighting appliance had the defect to which the brightness of the light source of each lighting unit falls, when the number of a lighting unit is increased exceeding the current capacity of the current controlling circuit of a power supply unit. In order to supply a predetermined current to each lighting unit, the current capacity of a current controlling circuit must be changed according to the number of lighting units, and great time and effort is required. In order to supply a predetermined current to each lighting unit after increasing the number of the lighting unit, the current capacity of the current controlling circuit had to be changed. Thus an expansion of lighting units had taken great time and effort.

The present invention has an object to provide a lighting appliance in which a lighting unit is compact and able to keep brightness without decreasing, even if many lighting units have been coupled together.

In order to achieving the object, a first aspect of the lighting appliance according to the present invention is provided with, a power supply unit provided with; a first housing, a rectifier accommodated in the first housing for converting an AC current to a DC current, a first electricity-supplying connector provided on a side of the first housing, and a lighting unit provide with; a second housing, a power supply line provided with, an electricity-receiving connector which is provided on a side of the second housing, and constituted to be electrically and mechanically connectable with the first electricity-supplying connector of the power supply unit, a second electricity-supplying connector which is provided on a side other than the second housing, for feeding out the DC current received by the electricity-receiving connector, a second electricity-supplying connector having the same feature with the electricity-supplying connector of the power supply unit, a bus-line connected between the electricity-receiving connector and the second electricity-supplying connector, a current regulator accommodated in the second housing, which is connected to the power supply line, and a light emitting semiconductor accommodated in the second housing, which is driven by the output power of the current regulator.

In order to achieving the object, a second aspect of the lighting appliance according to the present invention is provided with, a power supply unit provided with; a first housing which is provided with a principal surface and side surfaces, a first electricity-supplying side surface perpendicular to the principal surface, a rectifier accommodated in the first housing for converting an AC current to a DC current, a first electricity-supplying connector derived in parallel to the first electricity-supplying side surface of the first housing for feeding the DC current which is provided on one side of the first housing, and is acquired in the rectifier circuit, and a lighting unit provided with; a second housing which is provided with a principal surface and side surfaces, an electricity-receiving side surface provided on the second housing, which is perpendicular to the principal surface of the second housing and engageable to the first electricity-supplying side surface of the first housing, a second electricity-supplying side surface provided on the second housing, which is perpendicular to the principal plane of the second housing and engageable to the electricity-receiving side surface of the other lighting unit, a power supply line provide with; an electricity-receiving connector which is provided on the other side of the second housing, and is derived in parallel to an electricity-receiving side surface of the second housing, and is constituted to be electrically and mechanically connectable with the first electricity-supplying connector of the power supply unit, a second electricity-supplying connector having the same feature with the electricity-supplying connector of the power supply unit, which is provided on other side of the second housing, and is derived in parallel to the second electricity-supplying side surface of the second housing, and is constituted for feeding the DC current received by the electricity-receiving connector, and a bus-line connected between the electricity-receiving connector and the second electricity-supplying connector, a current regulator which is accommodated in the second housing and connected to the power supply line, and a light emitting semiconductor accommodated in the second housing and being driven by the output power of the current regulator.

The term, "DC current" means not only a completely stable current but also a current including a pulsating current.

Additional objects and advantages of the present invention will be apparent to persons skilled in the art from a study of the following description and the accompanying drawings, which are hereby incorporated in and constitute a part of this specification.

A more complete appreciation of the present invention and many of the attendant advantages thereof will be readily obtained as the same becomes better understood by reference to the following detailed description when considered according to the accompanying drawings, wherein:
Fig. 1 is a perspective view showing the first embodiment of the lighting appliance of the present invention;
Fig. 2 is an exploded view of the lighting appliance of Fig. 1;
Fig. 3 is a block diagram showing the electric circuit of the lighting appliance of Fig. 1;.
Fig. 4 is a section of the lighting unit constituting the lighting appliance of Fig. 1;
Fig. 5 is a perspective view showing the second embodiment of the lighting appliance of the present invention; and
Fig. 6 is an exploded view of the lighting appliance of Fig. 5.

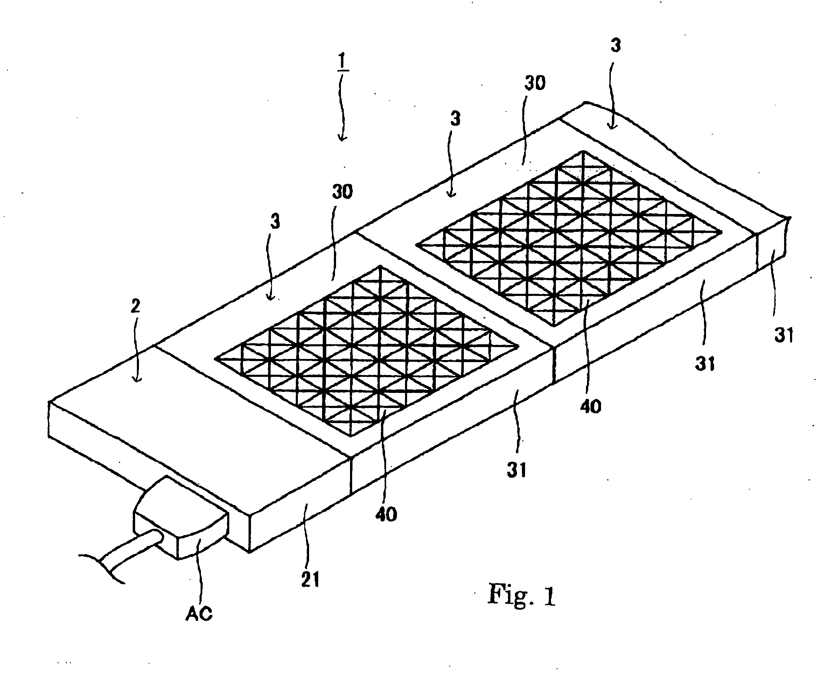

The present invention will be described in detail with reference to the attached drawings, Figs. 1 through 6.

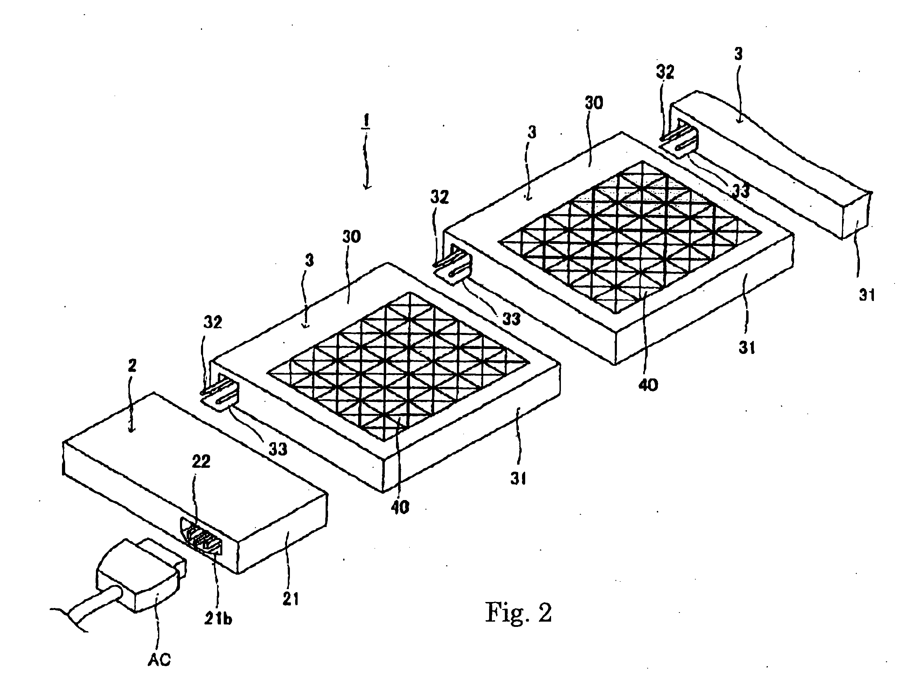

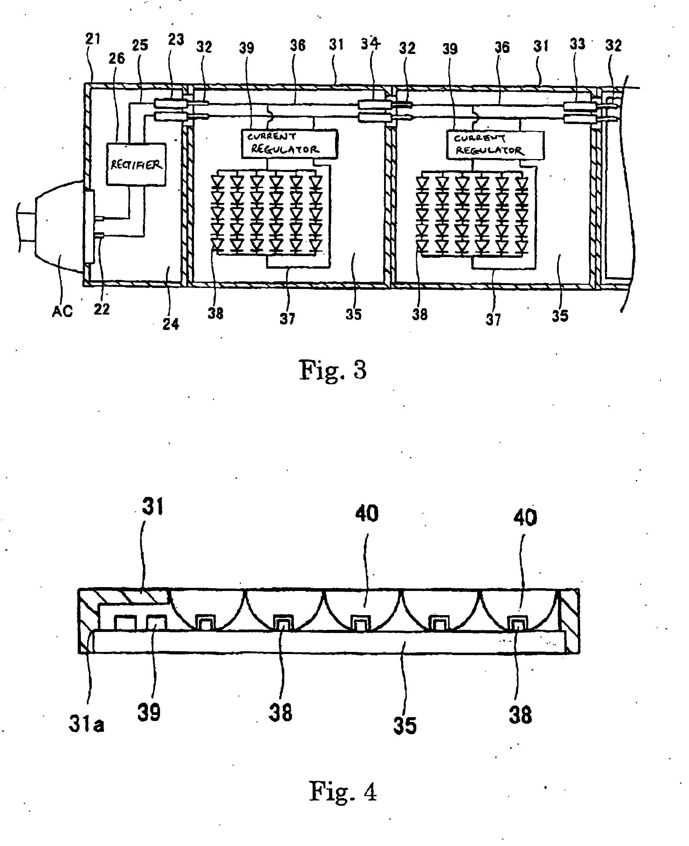

A first embodiment of the present invention will be explained in reference to Figs. 1 thru/or 4. Fig. 1 is a perspective view showing the lighting appliance according to the first embodiment. Fig. 2 is an exploded view of the lighting appliance of Fig. 1. Fig. 3 is a block diagram showing the electric circuit of the lighting appliance of Fig. 1. Fig. 4 is section of the lighting unit constituting the lighting appliance of Fig. 1.

As shown in Figs. 1 and 2, the lighting appliance 1 comprises one power supply unit 2 and one or more lighting units 3. The power supply unit 2 is provided with a housing (hereinafter, referred to as "first housing) 21. The first housing is equipped with an AC A plug AC of a power supply cord for supplying an external AC inserts an external AC power supply in the first housing 21, and the connectable AC electricity-receiving portion 22 is equipped. The AC electricity-receiving portion 22 can be an electricity-receiving cord extended from the first housing 21. A first electricity-supplying connector 23 is equipped in other portions of the first housing 21.

A DC generating circuit (hereinafter, referred to as "rectifier circuit") 26 is equipped in the first housing 21. An input of the rectifier 26 is connected to the AC electricity-receiving portion 22, and an output thereof is connected to the first electricity-supplying connector 23. The rectifier 26 converts an AC current supplied from an external AC power supply into a DC current. Generally the rectifier 26 is formed in a full-wave-rectification bridge circuit.

A lighting unit 3 is provided with a housing (hereinafter, referred to as "second housing") 30. The second housing 30 comprises a chassis 35 and a cover 31 which are explained later.

An electricity-receiving connector 32 and a positioning guide 33 are equipped on one side of the cover 31 of the second housing 30. On other side of the cover 31, a first electricity-supplying connector 23 is equipped.

An electricity-receiving connector 32 of the lighting unit 3 is constituted to be connected to the first electricity-supplying connector 23 of the power supply unit 2. Two or more of the lighting unit 3 with the same configuration can be interlocked together in practical use. In interlocking the lighting units 3, the electricity-receiving connector 32 of rear one in adjacent lighting units 3 is connected to the second electricity-supplying connector 34 of the front one of the lighting units 3. Then the electricity-receiving connector 32 of the forefront lighting unit 3 in the interlocked group is connected to the first electricity-supplying connector 23 of the power supply unit 2 as mentioned above. Meanwhile, the lighting unit 3 can be used independently.

Fig. 3 is a block diagram showing the electric circuit of the lighting appliance 1 as shown in Figs. 1 and 2. A power supply line 37 is configured in each of the lighting units 3. This power supply line 37 comprises the electricity-receiving connector 32, the second electricity-supplying connector 34 and a bus-line 36 connected between them.

A light source 41 wherein a plurality of light emitting semiconductors (hereinafter, referred to as "LED") 38 are disposed in a matrix array is connected to the power supply line 37 through a current regulator 39. The current regulator 39 feeds a certain quantity of current from the power supply line 37 to the light source 41 from the. The light source 41 and the current regulator 39 are equipped in the second housing 30.

In this embodiment, the light source 41 is constituted with 30 pieces of the LED 38. Here, a set of five LEDs 38 are connected in series. And six sets of the series-connected groups are connected in parallel. Consequently, the matrix array of the LEDs 38 is formed. As shown in Figs. 1 and 2, a lens 40 for condensing light emit from the LEDs 38 is provided on the upper surface of the cover 31 1 in facing the light source 41.

In this embodiment, the rectifier 26 is provided only in the power supply unit 2. Therefore, the lighting unit 3 can be miniaturized. Since the lighting unit 3 is supplied the DC current, insulation distances between two connector pins in each of the electricity-receiving connector 32 and the second electricity-supplying connector 34 come to be shorter than that of the AC electricity-receiving portion 22 of a power supply unit 2. Thereby, the electricity-receiving connector 32 and the second electricity-supplying connector 34 of the lighting unit 3 can be miniaturized. Therefore, the housing 30 of the lighting unit 3 can also be miniaturized.

In this embodiment, a large installation space is applied to the light source 41 in the lighting unit 3, since the rectifier 26 does not exist in the lighting unit 3. If the installation space of the light source 41 is reduced, a quantity of light emitted from the lighting unit 3 decreases. In this respect, a sufficient quantity of light can be emitted in this embodiment, while miniaturizing the lighting unit 3. On the other hand, the current regulator 39 is constituted very small as compared with the rectifier 26. Therefore, the lighting unit 3 is not taken a wide space by the current regulator 39.

In this embodiment, all the lighting units 3 are equipped with the current regulator 39. Therefore, the light sources 41 in the lighting units 3 are uniquely supplied a predetermined quantity of current from the current regulator 39, respectively. So, even if a plurality of the lighting units 3 are interlocked, the brightness of each of the light sources 41 does not fall.

Generally, a brightness of LED has a wide dispersion. Consequently, the brightness of the light source 41 is often apt to vary among the lighting units 3. However, in this embodiment, the current of the current regulator 39 equipped in the lighting unit 3 can be adjusted. Therefore, the dispersion of the brightness among the lighting units 3 can be reduced or eliminated.

In this embodiment, the LED 38 constituting the light source 41 and the current regulator 39 are mounted on the chassis 35 constituting the back of the second housing 30, as shown in Fig. 4, Therefore, heat of them is efficiently radiated from the chassis 35 to outside. Consequently, the temperature rise in the lighting unit 3 is controlled, and deterioration of LED 38 is inhibited. Also, warpage of the chassis 35 due to the temperature rise is prevented. Therefore, an orientation of the light radiated from the from the LED 38 mounted on the chassis 35 is kept accurately.

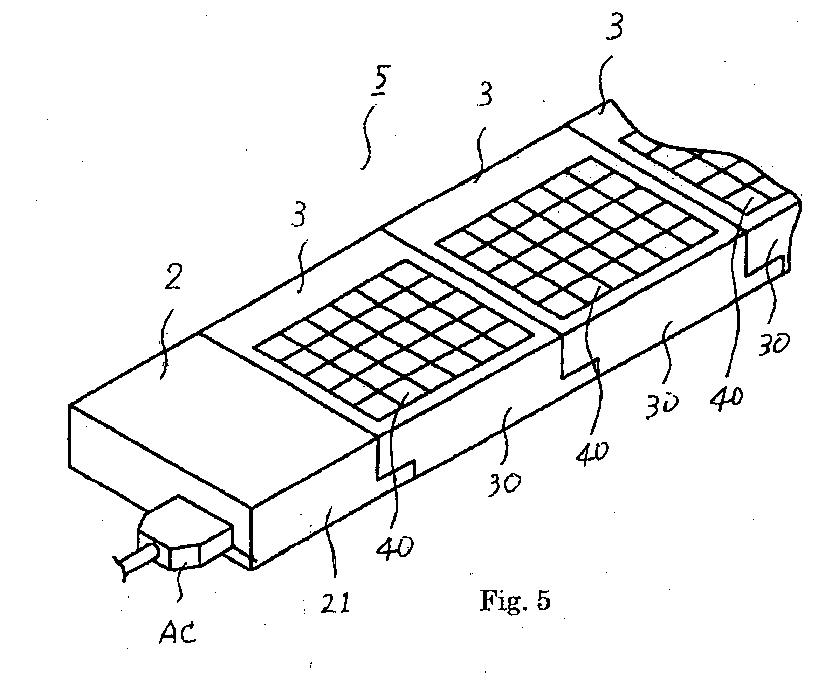

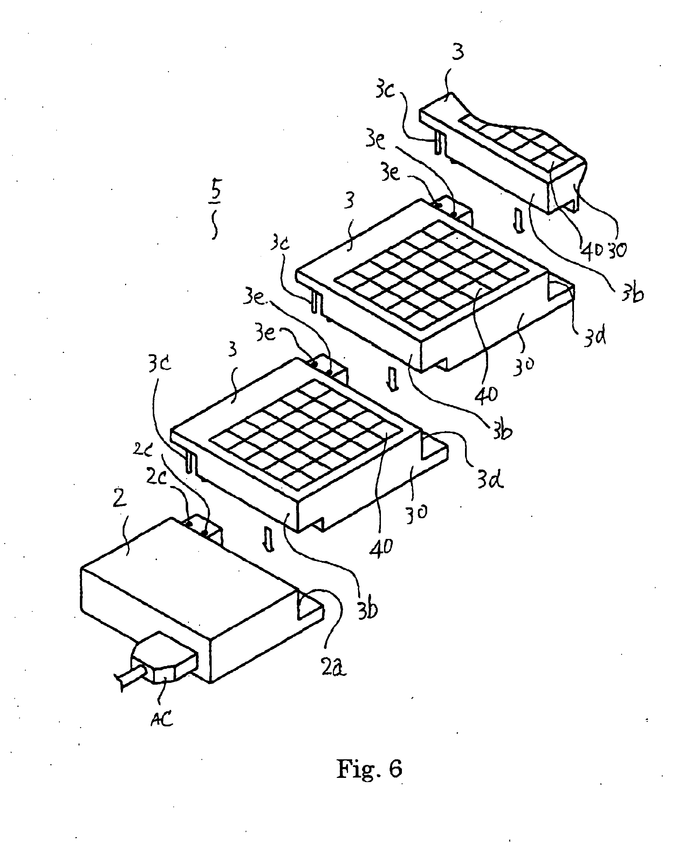

Referring now to Figs. 5 and 6, a second embodiment of the present invention will be explained. Fig. 5 is a perspective view showing the lighting appliance according to the second embodiment. Fig. 6 is an exploded view of the lighting appliance of Fig. 5. In Figs. 5 and 6, the same or identical elements with those in Figs. 1 and 2 are assigned with same reference numerals and omitted their explanation.

As shown in Figs. 5 and 6, the lighting appliance 5 comprises one power supply unit 2 and one or more lighting units 3. The power supply unit 2 is provided with a first housing 21. The first housing 21 has the first electricity-supplying side surface 2a which engages with the electricity-receiving side surface 3b of the second housing 30 of the lighting unit 3 which will be described later. The first electricity-supplying side surface 2a of the first housing 21 is perpendicular to the principal surface of the first housing 21. The electricity-receiving side surface 3b of the second housing 30 is also perpendicular to the principal surface of the second housing 30. The power supply unit 2 is provided with a first electricity-supplying connector 2c derived in parallel to the first electricity-supplying side surface 2a. The first housing 21 has a rectifier (not shown) mounted therein which converts an AC current supplied from an external AC power supply through a feed plug AC to a DC current.

The lighting unit 3 is provided with a second housing 30. The second housing 30 has an LED 38 for illumination, which is mounted therein. The second housing 30 has an electricity-receiving connector 3c derived in parallel to the electricity-receiving side surface 3b which is engageable with the first electricity-supplying side surface 2a of the power supply unit 2, and the electricity-receiving side surface 3b. This electricity-receiving connector 3c is constituted in connectable with the first electricity-supplying connector 2c of the power supply unit 2. The second housing 30 is provided with a second electricity-supplying side surface 3d connectable to an electricity-receiving side surface 3b of other lighting unit 3 and a second electricity-supplying connector 3e derived in parallel to the second electricity-supplying side surface 3d. The second electricity-supplying side surface 3d of the second housing 30 is also perpendicular to the principal surface of the second housing 30. Each of the lighting units 3 has a same configuration. The electricity-receiving side surface 3b is engageable with the first electricity-supplying side surface 2a of the power supply unit 2, as well as to the second electricity-supplying side surface 3d of other second housing 30.

The second housing 30 is provided with a current regulator 39 which are electrically connected to the bus-line between the electricity-receiving connector 3c and the second electricity-supplying connector 3e and LEDs 38 which illuminates with the output power of the current regulator 39.

By moving the electricity-receiving side surface 3b of the lighting unit 3 along the arrow sign in Fig. 6 toward the first electricity-supplying side surface 2a of the power supply unit 2, the power supply unit 2 and the lighting unit 3 are electrically connected to each other.

According to the second embodiment of the lighting appliance, the units 2 and 3 can be electrically connected to each other in the direction orthogonal to the direction of interlocking action of the power supply unit 2 and the lighting unit 3. Therefore, further to the effect of the first embodiment of the lighting appliance, the second embodiment of the lighting appliance has an effect that the power supply unit 2 and the lighting unit 3 are closely placed in a limited space. Therefore, according to the second embodiment of the lighting appliance, as the units 2 and 3 are electrically connected along the direction perpendicular to the interlocking action of the power supply unit 2 and the lighting unit 3 are closely mounted in the limited space.

The present invention in its broader aspects is not limited to the specific details and representative embodiments shown and described herein. Accordingly, various modifications may be made without departing from the spirit or scope of the general inventive concept as defined by the appended claims and their equivalents. For example, a voltage control circuit can be provided in the power supply unit 2, for controlling the DC voltage applied to the lighting unit 3 to a predetermined voltage.

According to the first aspect of the present invention, the lighting unit can be miniaturized, and keeps brightness without decreasing, even if many lighting units have been coupled together. According to the second aspect of the present invention, the lighting units are closely placed in a limited space, since each unit is electrically connected along the direction perpendicular to the interlocking action of the power supply unit 2 and the lighting unit 3.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A lighting appliance comprising a power supply unit and a lighting unit, **characterized in that**
the power supply unit is provided with;
a first housing,
a rectifier accommodated in the first housing for converting an AC current to a DC current,
a first electricity-supplying connector provided on a side of the first housing,
and
the lighting unit is provide with;
a second housing,
a power supply line provided with, an electricity-receiving connector which is provided on a side of the second housing, and constituted to be electrically and mechanically connectable with the first electricity-supplying connector of the power supply unit, a second electricity-supplying connector which is provided on the other side of the second housing, for feeding out the DC current received by the electricity-receiving connector, a second electricity-supplying connector having the same feature with the electricity-supplying connector of the power supply unit, a bus-line connected between the electricity-receiving connector and the second electricity-supplying connector,
a current regulator accommodated in the second housing, which is connected to the power supply line,
and
a light emitting semiconductor accommodated in the second housing, which is driven by the output power of the current regulator.

2. A lighting appliance as claimed in claim 1; **characterized in that** the second electricity-supplying connector is electrically and mechanically connectable with the electricity-receiving connector provided in another lighting unit.

3. A lighting appliance as claimed in claim 1; **characterized in that** the second electricity-supplying connector is electrically and mechanically connectable with he first electricity-supplying connector provided on the housing of the power supply unit.

4. A lighting appliance comprising a power supply unit and a lighting unit, **characterized in that**
the power supply unit is provided with;
a first housing which is provided with a principal surface and side surfaces,
a first electricity-supplying side surface perpendicular to the principal surface,
a rectifier accommodated in the first housing for converting an AC current to a DC current,
a first electricity-supplying connector derived in parallel to the first electricity-supplying side surface of the first housing for feeding the DC current which is provided on one side of the first housing, and is acquired in the rectifier circuit,
and
the lighting unit is provided with;
a second housing which is provided with a principal surface and side surfaces,
an electricity-receiving side surface provided on the second housing, which is perpendicular to the principal surface of the second housing and engageable to the first electricity-supplying side surface of the first housing,
a second electricity-supplying side surface provided on the second housing, which is perpendicular to the principal plane of the second housing and engageable to the electricity-receiving side surface of the other lighting unit,
a power supply line provide with;
an electricity-receiving connector which is provided on one side of the second housing, and is derived in parallel to the electricity-receiving side surface of the second housing, and is constituted to be electrically and mechanically connectable with the first electricity-supplying connector of the power supply unit,
a second electricity-supplying connector having the same feature with the electricity-supplying connector of the power supply unit, which is provided on other side of the second housing, and is derived in parallel to the second electricity-supplying side surface of the second housing, and is constituted for feeding the DC current received by the electricity-receiving connector,
and
a bus-line connected between the electricity-receiving connector and the second electricity-supplying connector,
a current regulator which is accommodated in the second housing and connected to the power supply line,
and
a light emitting semiconductor accommodated in the second housing and being driven by the output power of the current regulator.
